(19) **Europäisches Patentamt**
**European Patent Office**
**Office européen des brevets**

(11) **EP 4 629 580 A1**

(12) **EUROPEAN PATENT APPLICATION**

(43) Date of publication:
08.10.2025 Bulletin 2025/41

(21) Application number: 25165838.1

(22) Date of filing: 25.03.2025

(51) International Patent Classification (IPC):
*H04L 27/26* (2006.01)     *G01S 7/00* (2006.01)
*G01S 13/46* (2006.01)

(52) Cooperative Patent Classification (CPC):
**H04L 27/26532; G01S 7/006; G01S 13/46;**
H04L 27/2639

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 28.03.2024 IN 202421025660

(71) Applicant: **Tata Consultancy Services Limited**
**400 021 Mumbai, Maharashtra (IN)**

(72) Inventors:
• **SURESH, Sweta**
  **560066 Bengaluru, Karnataka (IN)**
• **KUMAR, Achanna Anil**
  **560066 Bengaluru, Karnataka (IN)**
• **KRISHNAMURTHY, Giridhar**
  **603103 Chennai, Tamil Nadu (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **SYSTEM AND METHOD FOR LOCALIZATION AND VELOCITY DETERMINATION IN INTEGRATED SENSING AND COMMUNICATION (ISAC)**

(57)     Conventional Orthogonal frequency division multiplexing (OFDM) is unable to retain its orthogonality and suffers loss in performance in high Doppler circumstances. The present disclosure converts a signal received in delay-time domain into delay-Doppler domain and extracts a guard band region from the received converted signal. A 2-dimensional fast Fourier transform is performed on guard band region extracted from received converted signal. A 2-dimensional fast Fourier transform of the received converted signal is divided with the 2-dimensional fast Fourier transform of transmitted signal to extract phase information. A dictionary is created using a pre-defined set of values of delay and Doppler. A sparse recovery problem is formed for received converted signal using an orthogonal matching pursuit algorithm. One or more parameters are estimated by identifying one or more locations pertaining to the one or more columns corresponding to L significant non-zero locations comprised in sparse vector of sparse recovery problem.

| Transmitter 202 | → | Receiver 204 | → | Guard band region extraction module 206 | → | 2-dimensional fast Fourier transform (FFT) module 208 | → | Dictionary 210 | → | Sparse recovery problem module 212 | → | Parameters estimation module 214 |

**FIG. 2**

EP 4 629 580 A1

**Description**

CROSS-REFERENCE TO RELATED APPLICATIONS AND PRIORITY

The present application claims priority to Indian application no. 202421025660, filed on March 28, 2024.

TECHNICAL FIELD

The disclosure herein generally relates to integrated sensing and communication (ISAC) applications, and, more particularly, to a system and method for localization and velocity determination in integrated sensing and communication (ISAC).

BACKGROUND

Integrated sensing and communication (ISAC) applications have the potential to be widely deployed, particularly in intelligent transportation systems. Among the various waveforms being for their efficacy for integrated sensing and communication (ISAC), Orthogonal Time Frequency Space (OTFS) is prominent due to its ability investigated to represent non-integer delay and Doppler shifts within the delay-Doppler (DD) domain. However, achieving accurate target parameter estimation using this waveform in an effective and computationally simpler manner poses a challenge in sensing applications.

The coexistence of radar and communication, or the integrated sensing and communication (ISAC), is advantageous as industries move towards the next generation of cellular networks since it has various uses, including intelligent transportation systems. The goal of the integrated sensing and communication (ISAC) is to create a single infrastructure that is advantageous for both communications and radar. In ISAC, dual-functional waveforms have been an interesting topic. Communication data can be embedded in radar signals, and communication signals can also be made to satisfy radar properties. Orthogonal frequency division multiplexing (OFDM) waveforms were examined for the integrated sensing and communication (ISAC) applications in these integrated waveforms study. However, in high Doppler circumstances, such as high-speed railway communications, conventional Orthogonal frequency division multiplexing (OFDM) is unable to retain its orthogonality and suffers a loss in performance. Orthogonal Time Frequency Space (OTFS) modulation has garnered interest recently as a potential solution to this problem. An alternate representation of the time-varying channel owing to mobility is the Orthogonal Time Frequency Space (OTFS) channel in the delay-Doppler (DD) domain gives Orthogonal Time Frequency Space (OTFS) the ability to work well even in high Doppler channels.

SUMMARY

Embodiments of the present disclosure present technological improvements as solutions to one or more of the above-mentioned technical problems recognized by the inventors in conventional systems. For example, in one embodiment, a method for localization and velocity determination in integrated sensing and communication (ISAC) is provided. The method includes receiving, via one or more hardware processors, a signal comprising of a pilot sequence and communication data, from a transmitter, and wherein a delay and a Doppler is added to the signal which travels through a wireless channel; converting, via the one or more hardware processors, the received signal in a delay-time (DT) domain into a delay-Doppler (DD) domain; extracting, via the one or more hardware processors, a guard band region from the received converted signal; performing, via the one or more hardware processors, a 2-dimensional fast Fourier transform (FFT) on the guard band region extracted from the received converted signal; dividing, via the one or more hardware processors, the 2-dimensional fast Fourier transform (2D-FFT) of the received converted signal with the 2-dimensional fast Fourier transform (2D-FFT) of the transmitted signal to extract a phase information, wherein the phase information comprises one or more parameters to be estimated; creating, via the one or more hardware processors, a dictionary using a pre-defined set of values of the delay and the Doppler, wherein each column of one or more columns of the dictionary comprises the phase information using a combination of the delay and the Doppler; forming, via the one or more hardware processors, a sparse recovery problem for the received converted signal using an orthogonal matching pursuit (OMP) algorithm, wherein the extracted phase information is compared with the created dictionary using the orthogonal matching pursuit (OMP) algorithm, and wherein the orthogonal matching pursuit (OMP) returns a sparse vector; and estimating, via the one or more hardware processors, the one or more parameters by identifying one or more locations pertaining to the one or more columns corresponding to a L significant non-zero locations comprised in the sparse vector of the sparse recovery problem.

In another aspect, there is provided a system for localization and velocity determination in integrated sensing and communication (ISAC). The system comprises: a memory storing instructions; one or more communication interfaces; and one or more hardware processors coupled to the memory via the one or more communication interfaces, wherein the one or more hardware processors are configured by the instructions to: receives a signal comprising of a pilot sequence and communication data, from a transmitter, and wherein a delay and a Doppler is added to the signal which travels through a wireless channel. The system further includes converting the received signal in a delay-time (DT) domain into a delay-Doppler (DD) domain; extracting a guard band region from the received converted signal; performing a 2-dimensional fast Fourier transform (FFT) on the guard band region extracted from the received converted signal; dividing the 2-dimensional fast Fourier transform (2D-FFT) of the received converted signal with the 2-dimensional fast Fourier transform (2D-FFT) of the transmitted signal to extract a phase information, wherein the phase information comprises one or more parameters to be estimated; creating a dictionary using a pre-defined set of values of the delay and the Doppler, wherein each column of one or more columns of the dictionary comprises the phase information using a combination of the delay and the Doppler; forming a sparse recovery problem for the received converted signal using an orthogonal matching pursuit (OMP) algorithm, wherein the extracted phase information is compared with the created dictionary using the orthogonal matching pursuit (OMP) algorithm, and wherein the orthogonal matching pursuit (OMP) returns a sparse vector; and estimating the one or more parameters by identifying one or more locations pertaining to the one or more columns corresponding to a L significant non-zero locations comprised in the sparse vector of the sparse recovery problem.

In yet another aspect, there are provided one or more non-transitory machine-readable information storage mediums comprising one or more instructions which when executed by one or more hardware processors cause receiving a signal comprising of a pilot sequence and communication data, from a transmitter, and wherein a delay and a Doppler is added to the signal which travels through a wireless channel; converting the received signal in a delay-time (DT) domain into a delay-Doppler (DD) domain; extracting a guard band region from the received converted signal; performing a 2-dimensional fast Fourier transform (FFT) on the guard band region extracted from the received converted signal; dividing the 2-dimensional fast Fourier transform (2D-FFT) of the received converted signal with the 2-dimensional fast Fourier transform (2D-FFT) of the transmitted signal to extract a phase information, wherein the phase information comprises one or more parameters to be estimated; creating a dictionary using a pre-defined set of values of the delay and the Doppler, wherein each column of one or more columns of the dictionary comprises the phase information using a combination of the delay and the Doppler; forming a sparse recovery problem for the received converted signal using an orthogonal matching pursuit (OMP) algorithm, wherein the extracted phase information is compared with the created dictionary using the orthogonal matching pursuit (OMP) algorithm, and wherein the orthogonal matching pursuit (OMP) returns a sparse vector; and estimating the one or more parameters by identifying one or more locations pertaining to the one or more columns corresponding to a L significant non-zero locations comprised in the sparse vector of the sparse recovery problem.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary title system for localization and velocity determination in integrated sensing and communication (ISAC), according to some embodiments of the present disclosure.

FIG. 2 illustrates a functional block diagram of the system for localization and velocity determination in integrated sensing and communication (ISAC), according to some embodiments of the present disclosure.

FIGS. 3A and 3B are flow diagrams illustrating the steps involved in the method for localization and velocity determination in integrated sensing and communication (ISAC), according to some embodiments of the present disclosure.

FIG. 4 illustrates an Orthogonal Time Frequency Space (OTFS)-based single input (transmit) multiple output (receive) - ISAC (SIMO-ISAC) system in the multi-static radar scenario in conjunction with the method for localization and velocity determination in integrated sensing and communication (ISAC), according to some embodiments of the present disclosure.

FIG. 5 illustrates a transmitted signal in DD domain depicting column and row pilot, guard bands, and data in conjunction with the method for localization and velocity determination in integrated sensing and communication (ISAC), according to some embodiments of the present disclosure.

FIGS. 6A and 6B shows a comparison on row and column pilot structures for correlation and proposed phase-based method for localization and velocity determination in integrated sensing and communication (ISAC), according to some embodiments of the present disclosure.

FIGS. 7A and 7B demonstrates a range and a Doppler normalized RMSE performances, normalized with their respective resolutions, with $P_t$ for multiple targets, for column pilot structure, according to some embodiments of the present disclosure.

FIG. 8 shows a comparison on channel estimates of estimated Root Mean Square Error (RMSE) with oracle Root Mean Square Error (RMSE) in conjunction with the method for localization and velocity determination in integrated sensing and communication (ISAC), according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Conventional Orthogonal frequency division multiplexing (OFDM) is unable to retain its orthogonality and suffers a loss in performance, in case of high Doppler circumstances, such as high-speed railway communications. Orthogonal Time Frequency Space (OTFS) modulation has garnered interest recently as a potential solution to this problem. The present disclosure converts a signal received in a delay-time (DT) domain into a delay-Doppler (DD) domain and extracts a guard band region from the received converted signal. Further present disclosure performs a 2-dimensional fast Fourier transform (FFT) on the guard band region extracted from the received converted signal and divides the 2-dimensional fast Fourier transform (2D-FFT) of the received converted signal with the 2-dimensional fast Fourier transform (2D-FFT) of the transmitted signal to extract a phase information. Furthermore, the present disclosure creates a dictionary using a pre-defined set of values of the delay and the Doppler, wherein each column of one or more columns of the dictionary comprises the phase information using a combination of the delay and the Doppler. The present disclosure further forms a sparse recovery problem for the received converted signal using an orthogonal matching pursuit (OMP) algorithm, wherein the extracted phase information is compared with the created dictionary using the orthogonal matching pursuit (OMP) algorithm, and wherein the orthogonal matching pursuit (OMP) returns a sparse vector. Finally, the present disclosure estimates the one or more parameters by identifying one or more locations pertaining to the one or more columns corresponding to a L significant non-zero locations comprised in the sparse vector of the sparse recovery problem.

**GLOSSARY**

a, a and A denotes scalar, vector & matrix, respectively.

()T and ()H denotes the transpose & Hermitian operations.

⊗ denotes Kronecker product operator.

$vec(A)$ denotes column-wise vectorization of the matrix $A$.

$F_n$ and $F_n^H$ are n-point discrete Fourier transform (DFT) and inverse discrete Fourier transform (IDFT) matrices, $I_M$ represents M-dimensional identity matrix.

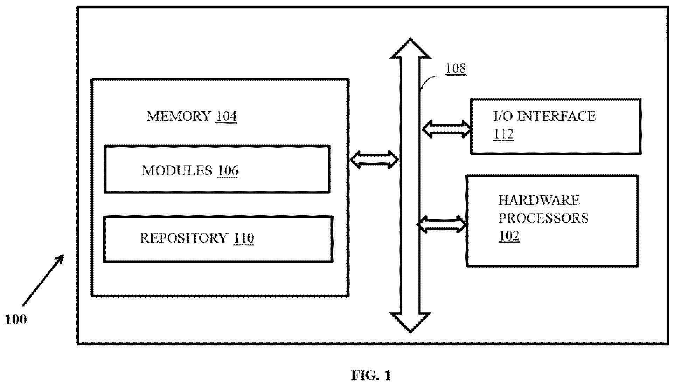

Referring now to the drawings, and more particularly to FIG. 1 through FIG. 8, where similar reference characters denote corresponding features consistently throughout the figures, there are shown preferred embodiments and these embodiments are described in the context of the following exemplary system and/or method.

FIG. 1 illustrates an exemplary system for localization and velocity determination in integrated sensing and communication (ISAC), according to some embodiments of the present disclosure. In an embodiment, the system 100 includes or is otherwise in communication with hardware processors 102, at least one memory such as a memory 104, and an I/O interface 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106. The memory 104 also includes a data repository (or repository) 110 for storing data processed, received, and generated by the plurality of modules 106.

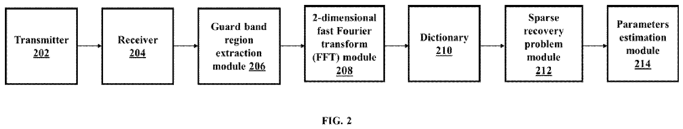

The plurality of modules 106 include programs or coded instructions that supplement applications or functions performed by the system 100 for localization and velocity determination in integrated sensing and communication (ISAC). The plurality of modules 106, amongst other things, can include routines, programs, objects, components, and data structures, which perform particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for localization and velocity determination in integrated sensing and communication (ISAC). In an embodiment, the modules 106 include a transmitter 202, a receiver 204, a guard band region extraction module 206, a 2-dimensional Fast Fourier Transform (FFT) module 208, a Dictionary 210, a Sparse recovery problem module 212, and a parameters estimation module 214. These modules are depicted in FIG. 2.

The data repository (or repository) 110 may include a plurality of abstracted pieces of code for refinement and data that is processed, received, or generated as a result of the execution of the module(s) 106.

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such an external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS).

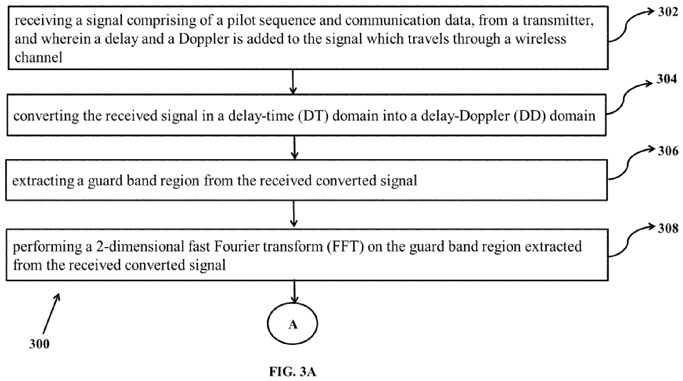

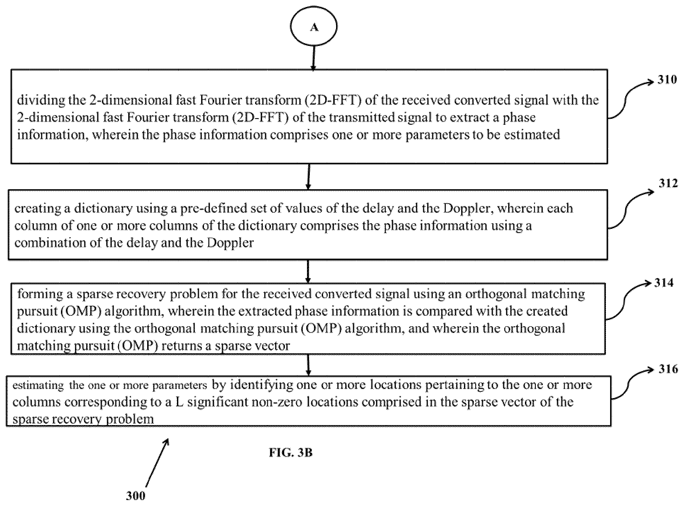

FIGS. 3A and 3B are flow diagrams illustrating a method for localization and velocity determination in integrated sensing and communication (ISAC) using the systems 100 of FIGS. 1-2, according to some embodiments of the present disclosure. Steps of the method of FIG. 3 shall be described in conjunction with the components of FIG. 2. At step 302 of the method 300 on the receiver 204 executed via one or more hardware processors 102 receives a signal comprising of a pilot sequence and communication data, from a transmitter 202 in one side of a road, in an example embodiment. The signal is converted from a delay-Doppler (DD) domain into a delay-time (DT) domain) before transmitting. Herein the embodiment of the present disclosure, the delay-Doppler (DD) domain is referred as first domain and the delay-time (DT) domain) is considered as second domain. A delay and a Doppler is added to the signal which travels through a wireless channel.

At step 304 of the method 300, the one or more hardware processors 102 convert the received signal in the delay-time (DT) domain into the delay-Doppler (DD) domain. The conversion of the received signal from the delay-time (DT) domain into the delay-Doppler (DD) domain is performed to help in further processing of the received signal.

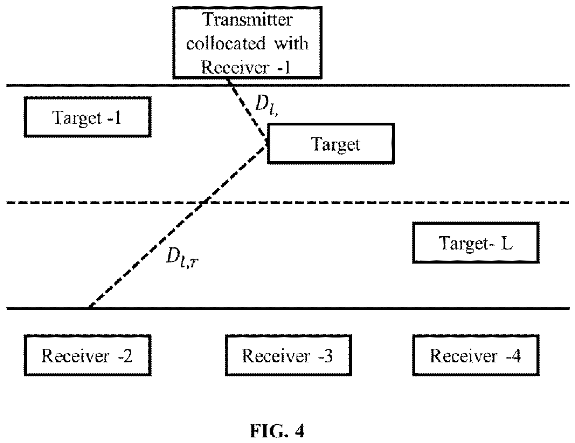

Consider an Orthogonal Time Frequency Space (OTFS)-based single input (transmit) multiple output (receive) ISAC (SIMO-ISAC) system in the multi-static radar scenario as depicted in FIG.4. In this arrangement, an Orthogonal Time Frequency Space (OTFS) transmitter *(Tx)* and receiver (Rx) are colocated on one side of the road, in addition to a few receivers, which are located on the opposite side of the road. It is assumed that $L$ vehicles are the intended communication receivers, which are also treated as targets moving at a maximum velocity of $v_{max}$ m/s. In the present disclosure, it is assumed that all *Tx* and Rx are perfectly time synchronized, and also Born approximation in the radar channel model is assumed. The transmitter sends Orthogonal Time Frequency Space (OTFS) frames of duration $NT$ with a bandwidth of $M\Delta f$, where $M, N, \Delta f,$ and $T$ respectively denote the number of delay bins, Doppler bins, subcarrier spacing, and symbol duration. Also, $\Delta\tau = \frac{1}{M\Delta f}$ and $\Delta\mu = \frac{1}{NT}$ are the delay and Doppler resolutions of the Orthogonal Time Frequency Space (OTFS) in the DD domain.

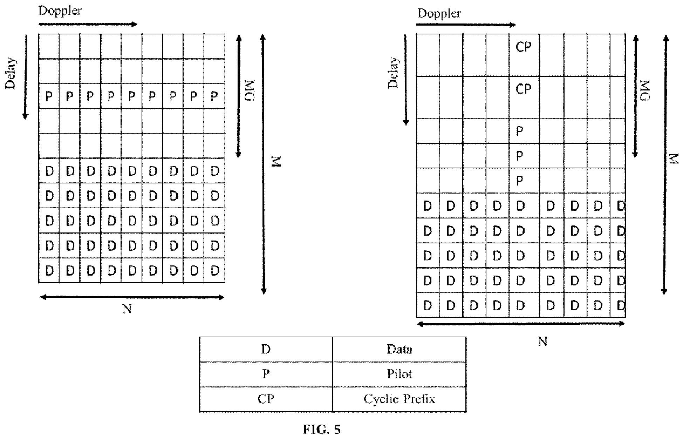

In the present disclosure, two widely used pilot frame structures including a column pilot structure and a row pilot frame structure are considered. In DD domain, for a column pilot-based Orthogonal Time Frequency Space (OTFS) frame, a pilot sequence is positioned along the Doppler axis surrounded by guard bands (known in the art). However, for a row pilot-based Orthogonal Time Frequency Space (OTFS) frame, a pilot sequence is placed along the delay axis with certain cyclic prefix and surrounded by guard bands, as shown in FIG. 5 (known in the art). The Zadoff-Chu (ZC) sequence (known in the art) was chosen as the pilot due to its good auto and cross-correlation properties. After mapping the information bits to one or more symbols, the one or more symbols are mapped into the remaining DD grid to form $X \in C^{M \times N}$, as illustrated in FIG.5.

In Orthogonal Time Frequency Space (OTFS) modulation, the Orthogonal Time Frequency Space (OTFS) frame is transformed from the DD domain to the time-frequency (TF) domain using the 2D Inverse Symplectic Finite Fourier Transform (ISFFT) and then to the DT domain using the Heisenberg transform (HT) (known in the art). The transmitted Orthogonal Time Frequency Space (OTFS) signal is written as, $S = F_M^H(F_M X F_N^H) = X F_N^H$. A cyclic prefix (CP) is then added to $S$, followed by column-wise vectorization to produce a time domain signal as s = $\text{vec}(\mathbf{S}) = (F_N^H \otimes I_M)\mathbf{x}$, where $x$ is the vectorized form of $X$. The DT domain signal, s, is frequency translated to $f_c$ and transmitted.

In an embodiment of the present disclosure, it is assumed that there are L intended targets on the road and the accurate removal of static clutter using a moving target indicator *(MTI)* scheme, the radar channel can be mathematically modeled in the DD domain as follows,

$$h(\tau, \mu) = \sum_{l=1}^{L} a_l \delta(\tau - \tau_l)\delta(\mu - \mu_l) \tag{1}$$

where $a_l$, $\tau_l$, and $\mu_l$ corresponds to the gain, delay in seconds, and Doppler shifts in Hertz produced by the $l^{th}$ target to the transmitted Orthogonal Time Frequency Space (OTFS) signal respectively and $\delta(.)$ is a Dirac delta function. Notably, the delay and Doppler shifts are assumed to be the non-integer multiples of $\Delta_\tau$ and $\Delta\mu$.

Let $R^{(r)}$ denote the signal received at the $r^{th}$ receiver in the DT domain. The received signal shall comprise of reflections from the L targets. The cyclic prefix is first removed from the received signal and passed through Orthogonal Time Frequency Space (OTFS) demodulator. In Orthogonal Time Frequency Space (OTFS) demodulation, the received signal in the DT domain is converted to the DD domain using $Y^{(r)} = R^{(r)}F_N$, where $Y^{(r)}$ denotes the received signal at $r^{th}$ receiver in the DD domain.

The receivers estimate the time of arrival (TOA) and bistatic Doppler frequency measurements for each bistatic pair. Using the TOA measurements, for each bistatic pair, the bistatic range (BR) can be written as,

$$D_l + D_{l,r} = \frac{TOA_{l,r} * c}{f_s} \tag{2}$$

where $TOA_{l,r}$ denotes the time taken for the transmitted signal from a transmitter at $(x_t, y_t, z_t)$ takes to reflect from $l^{th}$ target positioned at $(x_k, y_k, z_k)$ to reach the $r^{th}$ receiver at $(x_r, y_r, z_r)$, $D_l$ denotes the distance between the transmitter and $l^{th}$ target, $D_{l,r}$ denotes the distance between $l$ target and $r^{th}$ receiver, as shown in FIG. 4, c denotes the speed of light and $f_s$ is the sampling frequency. These bistatic range (BR) equations form a set of ellipsoids with the *Tx* and Rx considered as the focal points, and the intersection of all such ellipsoids depicts the position of the targets. The velocity of the target is then computed using the position estimates and the bistatic Doppler measurements (known in the art). It is important to note that the minimum number of bistatic pairs to find the location of the target is four. Herein the terms "time of arrival (TOA)" and "delay" can be interchangeably used. Herein the terms "bistatic Doppler frequency", "Doppler frequency" and "Doppler" can be interchangeably used.

At step 306 of the method 300, the guard band region extraction module 206 executed via the one or more hardware processors 102 extracts a guard band region from the received converted signal.

At step 308 of the method 300, the 2-dimensional Fast Fourier Transform (FFT) module 208 executed via the one or more hardware processors 102 performs a 2-dimensional Fast Fourier transform (FFT) on the guard band region extracted from the received converted signal.

In an embodiment of the present disclosure, the received Orthogonal Time Frequency Space (OTFS) signal in the DT domain is processed to compute the delay and Doppler estimates. The pilot and guard bands are first extracted, and the resulting signal is correlated with the local copy of the pilot sequence and L peaks are identified. These peaks yield the integer delay bin estimates, $\tau_{l,coarse,bin}$ for the $l^{th}$ target. Next, a series of Doppler hypotheses are generated spanning from $f_d = \{-f_{d,max}, -f_{d,max} + f_{d,res}, -f_{d,max} + 2f_{d,res}, \ldots \ldots ., f_{d,max}\}$. For each $l^{th}$ peak delay bin, these frequencies are employed to compensate for the Doppler effect caused by the target, and the resulting signal is correlated with the local copy of the pilot signal, and the frequency associated with the highest peak at zero Doppler frequency indicates the estimated bistatic Doppler frequency corresponding to the target (known in the art).

Row pilot-based frame structure: Unlike the column pilot structure, the structure of the pilot sequence in row-pilot is distorted in the DT domain. Hence, it is recommended to process the received signal in the DD domain to compute the delay and Doppler estimates. Similar to the column pilot-based structure, the pilot and guard bands, excluding CP, are extracted and the resulting signal is correlated with the ZC sequence in *2D* and the integer bin shifts, $\tau_{l,coarse,bin}$ and $\mu_{l,coarse,bin}$ for $l^{th}$ target associated with the L peaks are identified.

The correlation-based estimation approach is constrained by computing delay estimates only in integer bins, which may not accurately represent practical scenarios where fractional bins are highly likely. In row pilot structures, Doppler estimates are similarly confined to integer bins. In the column pilot scenario, Doppler estimation resolution depends upon $f_{d,res}$. It is important to note that even for a nominal resolution, the size of $f_d$ is substantial, leading to increased complexity.

At step 310 of the method 300, the 2-dimensional Fast Fourier Transform (FFT) module 208 executed via the one or more hardware processors 102 divides the 2-dimensional Fast Fourier transform (2D-FFT) of the received converted signal with the 2-dimensional Fast Fourier transform (2D-FFT) of the transmitted signal to extract a phase information. The phase information comprises one or more parameters to be estimated. Herein, the one or more parameters refers to the delay and the Doppler.

At step 312 of the method 300, the dictionary 210 executed via the one or more hardware processors 102 create a dictionary using a pre-defined set of values of the delay and the Doppler, wherein each column of one or more columns of the dictionary comprises a phase information using a combination of the delay and the Doppler.

At step 314 of the method 300, the sparse recovery problem module 212 executed via the one or more hardware processors 102 forms a sparse recovery problem for the received signal using an orthogonal matching pursuit (OMP) algorithm. The orthogonal matching pursuit (OMP) algorithm returns a sparse vector using the dictionary.

At step 316 of the method 300, the parameters estimation module 214 estimates the one or more parameters by identifying one or more locations pertaining to the one or more columns corresponding to a L significant non-zero locations comprised in the sparse vector of the sparse recovery problem.

Phase-based Estimation: In an embodiment of the present disclosure, the received DD frame, $Y^{(r)}$ consisting of pilot and guard symbols is extracted for further processing at each Rx. This approach can be mathematically explained as follows:

Let the extracted DD domain transmitted signal be $\boldsymbol{X}_{\tau,\mu} \in c^{MG^*N}$ where $M_G$ represents only those delay bins specific to pilot and guard symbols. Due to the presence of *L* targets that incur a delay of $\tau_l$ and a Doppler of $\mu_l$, the generalized expression for the received signal in the DD domain, at receiver r can be written as,

$$Y^{(r)}_{\tau,\mu} = \sum_{l=1}^{L} a_l \, \boldsymbol{X}_{\tau-\tau_{l,bin},\mu-\mu_{l,bin}} + \eta \qquad (3)$$

where $a_l$ denotes the gain associated with the path corresponding to the $l^{th}$ target, $\eta \in N(0, \sigma^2)$ represents the complex Gaussian noise with mean 0 and variance $\sigma^2$, $\tau_{l,bin} = \frac{\tau_l}{\Delta_\tau}$ and $\mu_{l,bin} = \frac{\mu_l}{\Delta\mu}$. It is important to note that the $\tau_{l,bin}$, $\mu_{l,bin}$ can take fractional values and are unitless. An optimal threshold of $3\sigma$ has been fixed to reduce the impact of noise from the received signal.

On computing the 2D FFT of (3), we get,

$$\tilde{Y}^{(r)}_{u,v} = \sum_{l=1}^{L} a_{\tau_l \mu_l} \, e^{-j2\pi\left(\frac{u\tau_{l,bin}}{M_G} + \frac{v\mu_{l,bin}}{N}\right)} \tilde{\boldsymbol{X}}_{u,v} + \tilde{\eta} \qquad (4)$$

where $\tilde{\eta}$ denotes the residual noise present in the received signal, $u = 0, 1,..., M_G - 1$ and $v = 0, 1,..., N - 1$. At the receiver, it is assumed to know the pilot that is transmitted, $X_{\tau,\mu}$. On dividing (4) with 2D FFT of the transmitted signal in the DD domain, it results in,

$$\boldsymbol{H}_{u,v} = \frac{\tilde{Y}^{(r)}_{u,v}}{\tilde{\boldsymbol{X}}_{u,v}} = \sum_{l=1}^{L} a_{\tau_l \mu_l} \, e^{-j2\pi\left(\frac{u\tau_{l,bin}}{M_G} + \frac{v\mu_{l,bin}}{N}\right)} + \tilde{\eta} \qquad (5)$$

where $H \in C^{MG \times N}$. Now, (5) can be modeled as a sparse recovery problem which can be written as,

$$\boldsymbol{h} = \Phi\boldsymbol{u}_s, \qquad (6)$$

where $h = vec(H) \in C^{MG N \times 1}$, $\boldsymbol{u_s}$ is a sparse vector having $L$ significant channel gain values. The dictionary $\Phi$ is a matrix of size $M_G N \times M_\tau N_\mu$ is constructed for all possible delay and Doppler bin shifts say $\tau = \{\tau_{low}, \tau_{low} + \tau_{res}, ..., \tau_{high}\}$, $\tau = \{\mu_{low}, \mu_{low} + \mu_{res}, ..., \mu_{high}\}$, where $M_\tau$, $N_\mu$ denote the cardinality of the sets $\tau$, $\mu$ respectively. Each column of this dictionary is constructed using a 2D complex exponential signal for a paired delay and Doppler bin shifts. Now, $\Phi$ can be expressed as, $\Phi = \phi_\tau \otimes \phi_\mu$, where $\Phi_\tau \in C^{M_G \times M_\tau}$, $\Phi_\mu \in C^{N \times N_\mu}$, and can be written as follows,

$$\phi_\tau = \begin{bmatrix} W_{M_G}^{\tau_{low}} & W_{M_G}^{(\tau_{low} + \tau_{res})} & ... W_{M_G}^{\tau_{high}} \end{bmatrix}, \tag{7}$$

$$\phi_\mu = \begin{bmatrix} W_N^{\mu_{low}} & W_N^{(\mu_{low} + \mu_{res})} & ... W_N^{\mu_{high}} \end{bmatrix}, \tag{8}$$

With $\left[W_{M_G}^{\tau_i}\right]_u = \left(e^{-j\frac{2\pi}{M_G}}\right)^{\tau_i u}$, $u = u = 0, 1,..., M_G - 1$ and $\left[W_N^{\mu_j}\right]_v = \left(e^{-j\frac{2\pi}{N}}\right)^{\mu_j v}$, $v = 0, 1,..., N-1$.
The sparse vector us can be estimated using the following optimization (known in the art),

$$\hat{u}_s = min_{u_s} ||u_s||l_1 s.t \left||h - \phi_{u_s}\right|| l_2 - \epsilon \tag{9}$$

To estimate sparse vector $u_s$, the computationally efficient greedy orthogonal matching pursuit (OMP) algorithm (known in the art) is employed. The column locations of $\Phi$ corresponding to the L significant non-zero locations of us shall provide the corresponding paired delay-Doppler values. It is important to note that, unlike the correlation based approach, the estimation accuracy is dependent on $\tau_{res}$, $\mu_{res}$ and not on $\Delta\tau$, $f_{d,res}$, $\Delta\mu$. Moreover, notice from equation (5), the estimation is agnostic to $\boldsymbol{X}_{\tau,\mu}$ and therefore, unlike the correlation-based approach, the method of the present disclosure yields similar estimation performance regardless of the pilot structure used. The dimensions of dictionary, $\Phi$ depends upon $M_\tau$ and $N_\mu$ and if a full search is employed, the dimension increases enormously requiring huge computation.

Complexity reduction: To reduce the size of the dictionary used in the OMP algorithm, the present disclosure implements the following two-step approach. Step 1: In the first step, the correlation-based approach, (as mentioned in the previous sections), is used to estimate the coarse estimates.

Step 2: Using the coarse estimates from the above step, the search range is reduced by considering only a subset, say $\tau_s \subset \tau$ and $\mu_s \subset \mu$ and forming dictionary $\Phi$ for only $\tau_s$ and $\mu_s$. Since $|\tau_s| \ll |\tau|$ and $|\mu_s| \ll |\mu|$, the dictionary size shall reduce significantly requiring much lesser computation for parameter estimation.

Uniqueness and target resolution capacity with the proposed approach: A sparse recovery problem has been formulated in equation (6), and a solution has been obtained using the orthogonal matching pursuit (OMP). Nonetheless, it is important to establish a guarantee regarding the uniqueness of the solution and the maximum target resolution capacity. To address this, k-rank (known in the art) is employed to provide the necessary guarantee and the bound, which is presented in next section for completeness.

Definition III. 1 (k-rank (known in the art)). The k-rank ($\alpha$) of matrix $A$ is defined as the largest value $\alpha$ such that every sub-matrix of order $\alpha$ is linearly independent.

Further, the present disclosure makes use of the following well-known sparse recovery result,

Theorem III.1 (known in the art). Given $\Phi \in C^{M_G N \times M_\tau N_\mu}$ has k-rank at least $\alpha$, $\boldsymbol{h} \in C^{M_G N \times 1}$ and $\boldsymbol{u_s} \in C^{M_\tau N_\mu \times 1}$ has a maximum sparsity of $\frac{\alpha}{2}$, then $\boldsymbol{u_s}$ is the unique solution to (9)

Let $\rho_\Phi$ denote the k-rank of $\Phi$, then the following proposition provides the solution guarantee and the bound on the maximum resolvable targets.

Proposition III.1. Assuming $\eta = 0$ and if $\rho_\Phi$ denote the rank of $\Phi$, then upto $L \leq \frac{\rho_\Phi}{2}$ delay-Doppler pairs can be jointly estimated.

Proof. Observe that $\Phi_\tau$ and $\Phi_\mu$ are Vandermonde matrices (known in the art). The k-rank of $\Phi$ can be computed by exploiting the properties of Vandermonde matrices. Since, $\tau_{res}$ and $\mu_{res}$ are non-zero values, the Vandermonde matrices $\Phi_\tau$ and $\Phi_\mu$ are full rank (known in the art). Hence, ranks of $\Phi_\tau$ and $\Phi_\mu$ are $\rho_{\Phi_\tau} = min(M_G, M_\tau)$ and $\rho_{\Phi_\mu} = min(N, N_\mu)$ respectively. By rank property of Kronecker product, $\rho_\Phi = P_{\Phi_\tau} \rho_{\Phi_\mu} = min(M_G, M_\tau) min(N, N_\mu)$. For Vandermonde matrices, the k-rank of $\Phi$, $\alpha = \rho_\Phi$ (known in the art). Hence from the above Proposition III.1, it is clear that up to $L \leq \frac{\rho_\Phi}{2}$ delay-Doppler pairs can be estimated.

FIG. 4 illustrates an Orthogonal Time Frequency Space (OTFS)-based single input (transmit) multiple output (receive) ISAC (SIMO-ISAC) system in the multi-static radar scenario in conjunction with the method for localization and velocity determination in integrated sensing and communication (ISAC), according to some embodiments of the present disclosure.

The simulation results are presented to demonstrate the target estimation performance of the proposed phase-based approach. The present disclosure considers an Orthogonal Time Frequency Space (OTFS)-based multi-static SIMO radar system and assumes a road-based scenario comprising of one transmitter and four receivers as depicted in FIG. 4. Table. 1 provides the details of the system parameters considered in the present disclosure. The efficiency of the approaches discussed in previous sections, employing different pilot designs, is tested by assuming 1, 2, and 3 targets moving simultaneously on the road with the maximum velocity considered to be 25 m/s. The maximum unambiguous range ($M_G\Delta R$) and the maximum velocity that can be detected with the system parameters considered are 1.6 km and $V_{max}= \pm 4571$ m/s respectively. The accuracy of the estimates is measured by root mean squared error (RMSE) which is

$$RMSE_p = \sqrt{\frac{1}{K}\sum_{k=1}^{K}(p - \hat{p})^2},$$

defined as, , where $p$ and $\hat{p}$ are the true and estimated values of the parameter respectively.

Table 1: ISAC Orthogonal Time Frequency Space (OTFS) system parameters

| $M \times N$ | $64 \times 48$ |
|---|---|
| Pilot sequence | Zadoff-Chu sequence |
| Subcarrier spacing, $\Delta f$ | 30 kHz |
| Center frequency, $f_c$ | 3 GHz |
| Bandwidth, $B$ | 1.92 MHz |
| Maximum Doppler frequency, $f_{d,max}$ | $\pm 707$ Hz |
| Noise Figure | 3 dB |
| Gain of antenna | 0 dB |
| Number of trials ($K$) | 100 |
| Delay resolution ($\Delta\tau$) | 0.5 $\mu$s |
| Doppler resolution ($\Delta\mu$) | 625 Hz |
| Range resolution ($\Delta R$) | 78 m |
| Velocity resolution ($\Delta V$) | 95 m/s |
| $f_{d,res}$ | 100 Hz |

Table 2 demonstrates the performance of the proposed approach for different delay and Doppler resolutions i.e., $\tau_{res}$ and $\mu_{res}$ respectively, for column pilot structure. A delay and Doppler resolution of $\tau_{res} = \mu_{res} = 1$ is identical to estimation at resolution of $\Delta\tau$ and $\Delta\mu$. Notice the significant improvement in the RMSE values as the resolution decreases below $\Delta\tau$ and $\Delta\mu$.

Table 2: RMSE vs Resolution for different delay and Doppler resolutions with the proposed phase based approach.

| Delay, Doppler Resolutions | Range RMSE (m) | Doppler RMSE (Hz) |
|---|---|---|
| 1, 1 | 0.7466 | 0.1235 |
| 0.5, 0.5 | 0.2638 | 0.0755 |
| 0.05, 0.05 | 0.0657 | 0.0244 |

FIG. 5 illustrates a transmitted signal in DD domain depicting column and row pilot, guard bands, and data in conjunction with the method for localization and velocity determination in integrated sensing and communication (ISAC), according to some embodiments of the present disclosure.

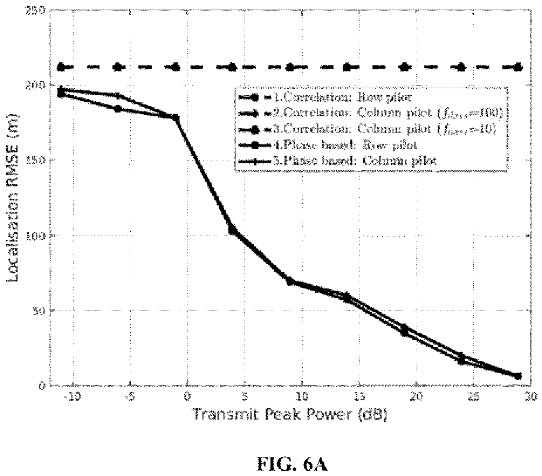

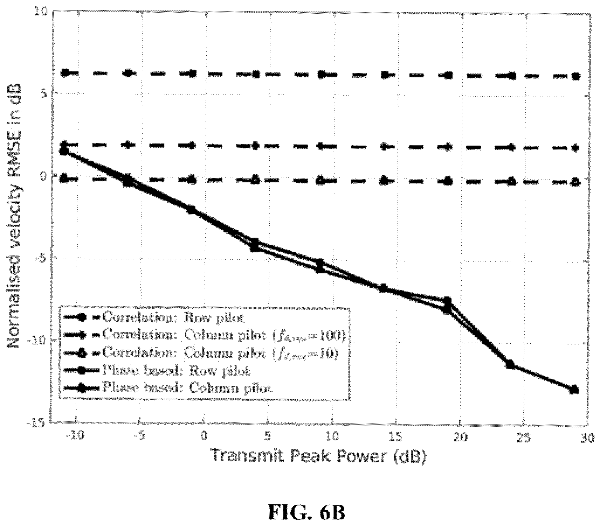

FIGS. 6A and 6B shows a comparison on row and column pilot structures for correlation and proposed phase-based method for localization and velocity determination in integrated sensing and communication (ISAC), according to some embodiments of the present disclosure. FIGS. 6A and 6B compare the localization and velocity performances with respect to transmit power $P_t$ between the correlation-based approach and the proposed approach and for both the row and column pilot scenarios. In the correlation method applied to column pilot scenario where the Doppler is estimated based on $f_d$, corresponding plots for different Doppler resolutions $f_{d,res}$ are provided. As described in the previous sections, the correlation method's performance is mainly constrained by integer bin resolution i.e., $\Delta\tau$ and $\Delta\mu$ ($f_{d,res}$ for Doppler estimation in case of column pilot). As a result of which, both plots show that performance doesn't change with $P_t$. In the case of the column pilot scenario, one can improve only the Doppler performance (and consequently velocity) by decreasing $f_{d,res}$ as evident in FIG. 6B, where the performance improves with lesser $f_{d,res}$. It is important to note here that decreasing $f_{d,res}$ leads to a substantial increase in the computational complexity. On the other hand, with row pilot, where the estimation is done in the DD domain, $f_{d,res}$ has no effect, resulting in similar performance for all scenarios. These plots demonstrate the correlation-based method's strong dependence on the pilot structure. It is worth noting here that while the column pilot scenario appears advantageous from a radar perspective, (known in the art) reveals that row pilots are preferred in communication scenarios due to the lower peak-to-average power ratio (PAPR). Thus, from the integrated sensing and communication (ISAC) perspective, the correlation-based estimation approach leads to ambiguity in choosing the pilot structure. For the proposed phase based approach, $\tau_{res}$ = 0.02 and $\mu_{res}$ = 0.02 are fixed and observed that both the plots clearly demonstrate significantly better performance than the correlation based approach even at low $P_t$. Furthermore, unlike the unchanging performance observed in the correlation method, the proposed approach shows improvement with increasing $P_t$. Besides improved performance, both plots clearly indicate that the proposed phase based approach performance is agnostic to pilot structure.

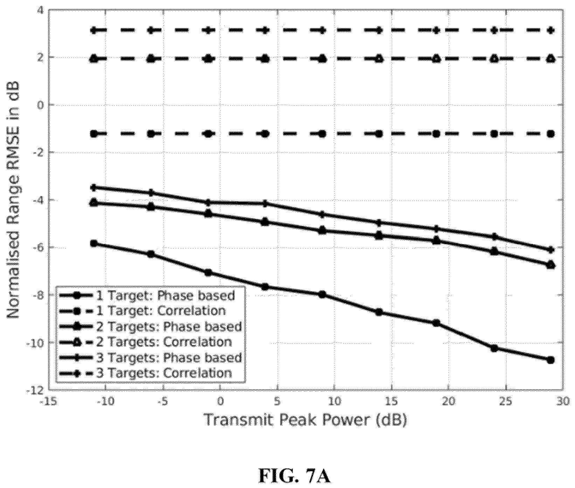

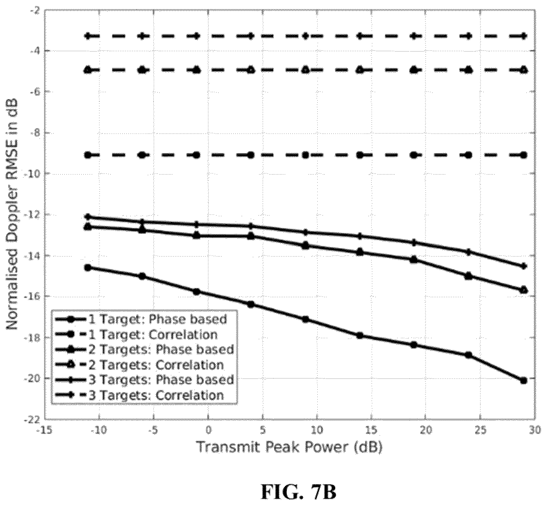

FIGS. 7A and 7B demonstrates a range and a Doppler normalized RMSE performances, normalized with their respective resolutions, with $P_t$ for multiple targets, for column pilot structure, according to some embodiments of the present disclosure. The Root Mean Square Error (RMSE) is calculated by considering every combination of receiver and target. Observe in both the figures, for both methods, as expected, the performance deteriorates with an increase in the number of targets. However, note that the performance of phase-based approach with multiple targets is still better than the performance of correlation-based approach with a single target. Also, notice from both the figures the performance difference between the correlation-based approach and the proposed phase-based approach widens as the number of targets increases. This is because, for targets that are closely located, the correlation-based approach provides inferior performance due to the possibility of shifts caused by different targets falling into the same integer bins, making it difficult to distinguish between the targets. In addition, due to the fractional shifts, the correlation with the local copy of the pilot signal does not yield just one peak as for integer shifts, instead, it yields several peaks, which may lead to false detection of peaks for multiple targets. However, these finer fractional bin-shifts can be efficiently distinguished using the proposed phase-based approach, thus providing an improved performance.

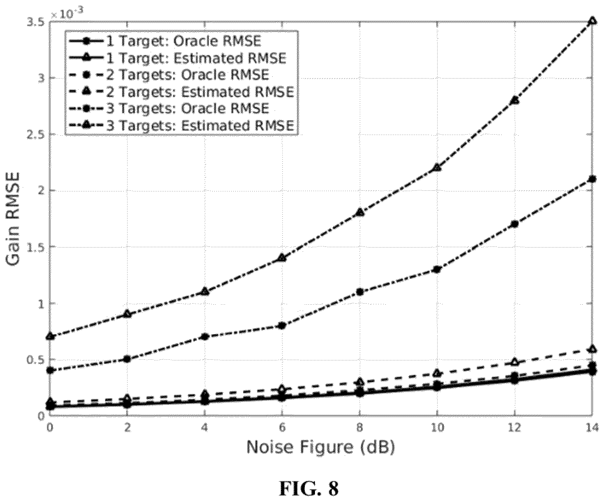

FIG. 8 shows a comparison on channel estimates of estimated RMSE with oracle RMSE in conjunction with the method for localization and velocity determination in integrated sensing and communication (ISAC), according to some embodiments of the present disclosure. FIG. 8 compares the performance of the estimated channel gain, $\hat{a}_l$, with the proposed phase-based approach and the oracle method, for column pilot structure, with the increasing impact of noise.

Upon estimation of the delay and Doppler, the channel gain is calculated using $\hat{a} = \Phi_{sub}^{\dagger} h$, where $\Phi_{sub}$ is a submatrix of $\Phi$ comprising of only columns corresponding to estimated delay and Doppler values. For the Oracle estimator, $\Phi_{sub}$ is constructed by assuming true delay and Doppler values, and hence, this provides a lower bound. It is observed from the plots (of FIG. 8) that as the impact of noise increases, the delay and Doppler estimation error increases. As the number of targets decreases, the gap narrows and approaches the Oracle estimator more closely due to the closer estimates obtained from the orthogonal matching pursuit (OMP) algorithm. The performance can be further enhanced by adjusting the values of $\tau_{res}$ and $\mu_{res}$ suitably, as depicted in Table 2, but at the cost of computation. It is again worth noting here that for a given Orthogonal Time Frequency Space (OTFS) frame, unlike the correlation-based approach, the performance of the method of the present disclosure is primarily constrained by $\tau_{res}$ and $\mu_{res}$, making notable performance improvement. Thus, apart from providing paired delay and Doppler estimates, the method of the present disclosure is structure - agnostic and offers a flexible computation-performance trade-off, making it attractive particularly for integrated sensing and communication (ISAC) applications.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the present disclosure or if they include equivalent elements with insubstantial differences from the literal language of the embodiments described herein.

In the present disclosure, a multi-static Orthogonal Time Frequency Space (OTFS)-based SIMO (single transmit and multiple receiver) radar system for the integrated sensing and communication (ISAC) application is presented. An approach exploiting the phase information has been proposed to estimate the non-integer delay jointly and Doppler shifts using the conventional orthogonal matching pursuit orthogonal matching pursuit (OMP) algorithm. One of the limitations of a sparse recovery solution is the need for a large dictionary matrix. The embodiments of present disclosure herein address the above-mentioned problem by imposing a constraint on delay and Doppler lower and upper limits that are later passed through the orthogonal matching pursuit (OMP) algorithm. Furthermore, the calculations on the maximum number of targets that can be effectively recovered have been presented.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated herein.

## Claims

**1.** A processor implemented method (300), comprising:

receiving (302), via one or more hardware processors, a signal comprising of a pilot sequence and communication data, from a transmitter, and wherein a delay and a Doppler is added to the signal which travels through a wireless channel;
converting (304), via the one or more hardware processors, the received signal in a delay-time (DT) domain into a delay-Doppler (DD) domain;
extracting (306), via the one or more hardware processors, a guard band region from the received converted signal;
performing (308), via the one or more hardware processors, a 2-dimensional fast Fourier transform (FFT) on the guard band region extracted from the received converted signal;
dividing (310), via the one or more hardware processors, the 2-dimensional fast Fourier transform (2D-FFT) of the received converted signal with the 2-dimensional fast Fourier transform (2D-FFT) of the transmitted signal to extract a phase information, wherein the phase information comprises one or more parameters to be estimated; creating (312), via the one or more hardware processors, a dictionary using a pre-defined set of values of the delay and the Doppler, wherein each column of one or more columns of the dictionary comprises the phase information using a combination of the delay and the Doppler;

forming (314), via the one or more hardware processors, a sparse recovery problem for the received converted signal using an orthogonal matching pursuit (OMP) algorithm, wherein the extracted phase information is compared with the created dictionary using the orthogonal matching pursuit (OMP) algorithm, and wherein the orthogonal matching pursuit (OMP) returns a sparse vector; and

estimating (316), via the one or more hardware processors, the one or more parameters by identifying one or more locations pertaining to the one or more columns corresponding to a L significant non-zero locations comprised in the sparse vector of the sparse recovery problem.

2. The processor implemented method as claimed in claim 1, wherein the one or more parameters comprise a time of arrival (TOA) and a Doppler frequency.

3. A system (100), comprising:

a memory (104) storing instructions;
one or more communication interfaces (112); and
one or more hardware processors (102) coupled to the memory (104) via the one or more communication interfaces (112), wherein the one or more hardware processors (102) are configured by the instructions to:

receive a signal comprising of a pilot sequence and communication data, from a transmitter in one side of a road, and wherein a delay and a Doppler to signal which travels through a wireless channel;
convert the received signal in the delay-time (DT) domain into the delay-Doppler (DD) domain;
extract a guard band region from the received converted signal;
perform a 2-dimensional fast Fourier transform (FFT) on the guard band region extracted from the received converted signal;
divide the 2-dimensional fast Fourier transform (2D-FFT) of the received converted signal with the 2-dimensional fast Fourier transform (2D-FFT) of the transmitted signal to extract a phase information, wherein the phase information comprises one or more parameters to be estimated;
create a dictionary using a pre-defined set of values of the delay and the Doppler, wherein each column of one or more columns of the dictionary comprises the phase information using a combination of the delay and the Doppler;
form a sparse recovery problem for the received converted signal using an orthogonal matching pursuit (OMP) algorithm, wherein the extracted phase information is compared with the created dictionary using the orthogonal matching pursuit (OMP) algorithm, and wherein the orthogonal matching pursuit (OMP) returns a sparse vector; and
estimate by identifying one or more locations pertaining to the one or more columns corresponding to a L significant non-zero locations comprised in a sparse vector of the sparse recovery problem.

4. The system as claimed in claim 3, wherein the one or more parameters comprise a time of arrival (TOA) and a Doppler frequency.

5. One or more non-transitory machine-readable information storage mediums comprising one or more instructions which when executed by one or more hardware processors cause:

receiving a signal comprising of a pilot sequence and communication data, from a transmitter, and wherein a delay and a Doppler is added to the signal which travels through a wireless channel;
converting the received signal in a delay-time (DT) domain into a delay-Doppler (DD) domain;
extracting a guard band region from the received converted signal;
performing a 2-dimensional fast Fourier transform (FFT) on the guard band region extracted from the received converted signal;
dividing the 2-dimensional fast Fourier transform of the received converted signal with the 2-dimensional fast Fourier transform of the transmitted signal to extract a phase information, wherein the phase information comprises one or more parameters to be estimated;
creating a dictionary using a pre-defined set of values of the delay and the Doppler, wherein each column of one or more columns of the dictionary comprises the phase information using a combination of the delay and the Doppler;

forming a sparse recovery problem for the received converted signal using an orthogonal matching pursuit (OMP) algorithm, wherein the extracted phase information is compared with the created dictionary using the orthogonal matching pursuit (OMP) algorithm, and wherein the orthogonal matching pursuit (OMP) returns a sparse vector; and

estimating the one or more parameters by identifying one or more locations pertaining to the one or more columns corresponding to a L significant non-zero locations comprised in the sparse vector of the sparse recovery problem.

6. The one or more non-transitory machine-readable information storage mediums as claimed in claim 5, wherein the one or more parameters comprise a time of arrival (TOA) and a Doppler frequency.

**FIG. 1**

| Transmitter 202 | → | Receiver 204 | → | Guard band region extraction module 206 | → | 2-dimensional fast Fourier transform (FFT) module 208 | → | Dictionary 210 | → | Sparse recovery problem module 212 | → | Parameters estimation module 214 |

FIG. 2

receiving a signal comprising of a pilot sequence and communication data, from a transmitter, and wherein a delay and a Doppler is added to the signal which travels through a wireless channel ⟿ 302

converting the received signal in a delay-time (DT) domain into a delay-Doppler (DD) domain ⟿ 304

extracting a guard band region from the received converted signal ⟿ 306

performing a 2-dimensional fast Fourier transform (FFT) on the guard band region extracted from the received converted signal ⟿ 308

300

A

FIG. 3A

A

dividing the 2-dimensional fast Fourier transform (2D-FFT) of the received converted signal with the 2-dimensional fast Fourier transform (2D-FFT) of the transmitted signal to extract a phase information, wherein the phase information comprises one or more parameters to be estimated

310

creating a dictionary using a pre-defined set of values of the delay and the Doppler, wherein each column of one or more columns of the dictionary comprises the phase information using a combination of the delay and the Doppler

312

forming a sparse recovery problem for the received converted signal using an orthogonal matching pursuit (OMP) algorithm, wherein the extracted phase information is compared with the created dictionary using the orthogonal matching pursuit (OMP) algorithm, and wherein the orthogonal matching pursuit (OMP) returns a sparse vector

314

estimating the one or more parameters by identifying one or more locations pertaining to the one or more columns corresponding to a L significant non-zero locations comprised in the sparse vector of the sparse recovery problem

316

**FIG. 3B**

300

Transmitter
collocated with
Receiver -1

Target -1

$D_{l,}$

Target

Target- L

$D_{l,r}$

Receiver -2

Receiver -3

Receiver -4

**FIG. 4**

| D | Data |
| P | Pilot |
| CP | Cyclic Prefix |

FIG. 5

**FIG. 6A**

**FIG. 6B**

**FIG. 7A**

**FIG. 7B**

23

**FIG. 8**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RAHMAN MUHAMMED TAHSIN ET AL: "Localization and Hardware Impairment Compensation Using Orthogonal Time, Frequency, and Space Principles", 2023 IEEE 34TH ANNUAL INTERNATIONAL SYMPOSIUM ON PERSONAL, INDOOR AND MOBILE RADIO COMMUNICATIONS (PIMRC), IEEE, 5 September 2023 (2023-09-05), pages 1-6, XP034458316, DOI: 10.1109/PIMRC56721.2023.10293799 [retrieved on 2023-10-31] * page 3 - page 4 * ----- | 1-6 | INV. H04L27/26 G01S7/00 G01S13/46 |
| | | | **TECHNICAL FIELDS SEARCHED (IPC)** |
| | | | H04L G01S |

The present search report has been drawn up for all claims

| Place of search | Date of completion of the search | Examiner |
|---|---|---|
| Berlin | 6 August 2025 | Feng, Mei |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

**EP 4 629 580 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- IN 202421025660